# EUROPEAN PATENT SPECIFICATION

(11) **EP 2 369 307 B1**
(45) Date of publication and mention of the grant of the patent: **21.12.2016**
(21) Application number: 11154393.0
(22) Date of filing: 14.02.2011
(51) Int. Cl.: G01F 15/00, G07F 13/02, B67D 7/30, B67D 7/42, B67D 7/48

(54) **Automatic liquid dispensing gun**
Automatische Flüssigkeitszapfpistole
Pistolet automatique de distribution de liquide

(30) Priority: 12.03.2010 IT MI20100403
(43) Date of publication of application: 28.09.2011
(73) Proprietor: PIUSI S.p.A., 46029 Suzzara (MN) (IT)
(72) Inventor: VARINI, Otto, 46029, SUZZARA MN (IT)
(74) Representative: Modiano, Micaela Nadia

(56) References cited:
- EP-A1- 0 450 798
- EP-A1- 0 719 728
- US-B1- 6 374 870

## Description

The invention relates to an automatic liquid dispensing gun

Nowadays so-called automatic guns for taking liquids from cisterns or large tanks and dispensing such liquids into containers are widespread. An extremely common example is of guns used in fuel stations located along the road network which take fuel from buried cisterns and transfer it to the tanks of motor vehicles.

Such guns comprise a structure provided with a connector for coupling to a pipe for feeding the liquid and with a nozzle designed to be inserted into the container designed to receive the dispensed liquid, and such nozzle comprises a duct for dispensing the liquid which is controlled by an actuation handle operated by the user and an air intake duct which reaches a device adapted to block the dispensing of the liquid when the inflow of air ceases, as occurs when the level of liquid in the container being filled rises to the point where it blocks the inlet of such air intake duct.

EP 0450798 A1 discloses a fluid dispensing nozzle having electro-mechanical controls, an in-line, point-of-delivery flow meter and a data processing unit coupled to the flow meter.

EP 0719728 A1 discloses a refueling nozzle which can easily be inserted into a filler opening, seal up the filler opening and prevent erroneous operation.

US 6374870 B1 discloses a gasoline which includes a system for preventing theft of gasoline by leaving without payment after refueling.

The aim of the present invention is to provide an improved automatic liquid dispensing gun.

This aim is achieved by an automatic liquid dispensing gun, according to the invention, characterised in that it comprises the features defined in the appended claims.

Further characteristics and advantages of the present invention will become better apparent from the description of two preferred, but not exclusive, embodiments of the invention, illustrated by way of non-limiting examples in the accompanying drawings wherein:
Figures 1 and 2 respectively show a side view and a plan view of the gun according to the invention;
Figures 3 and 4 show enlarged details highlighted in Figure 1;

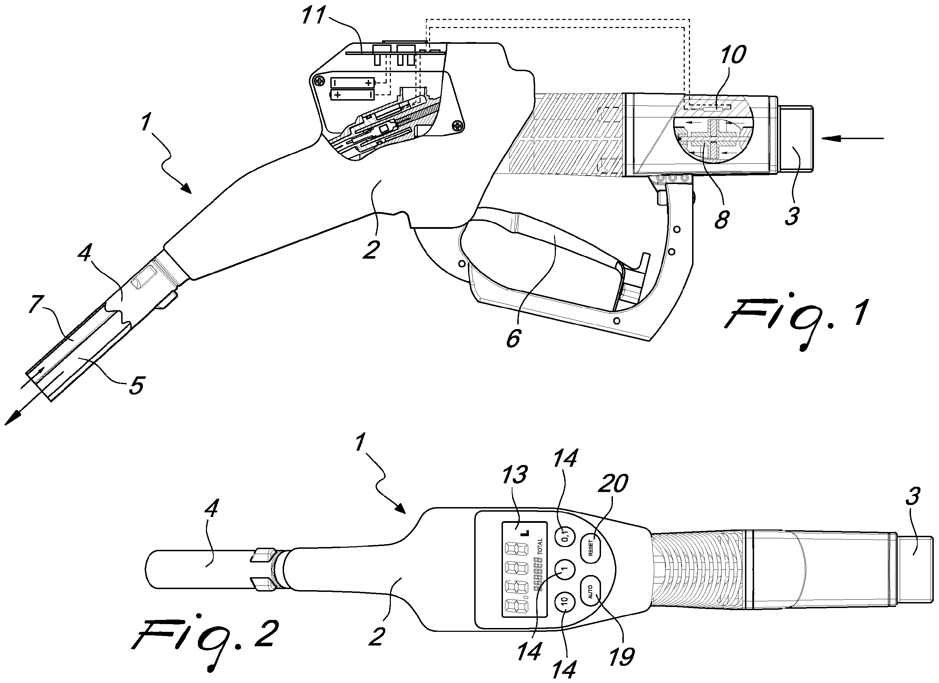

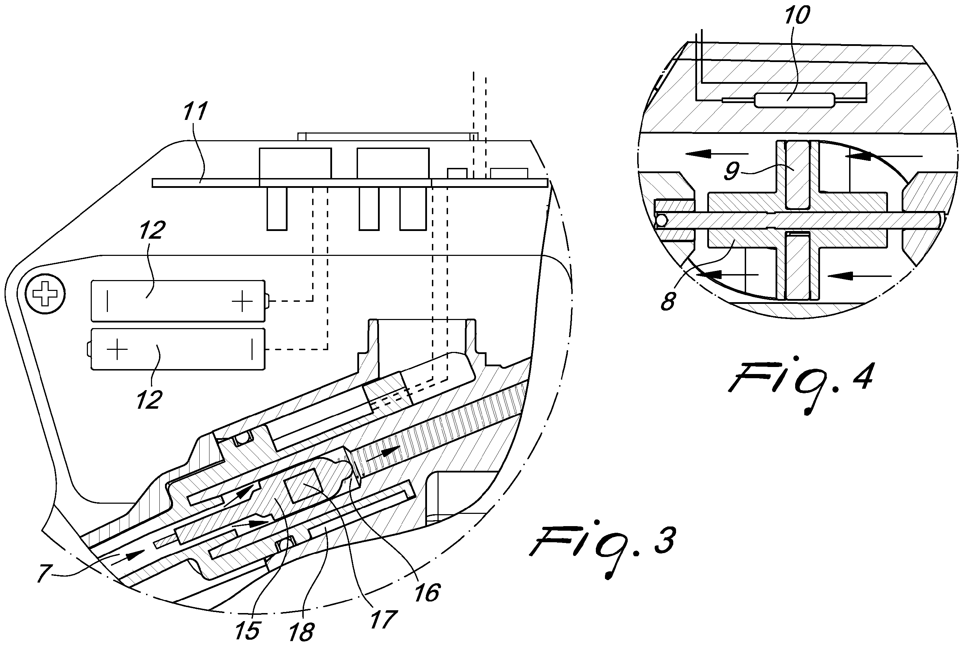

Figures 3 and 4 show enlarged details highlighted in Figure 1;

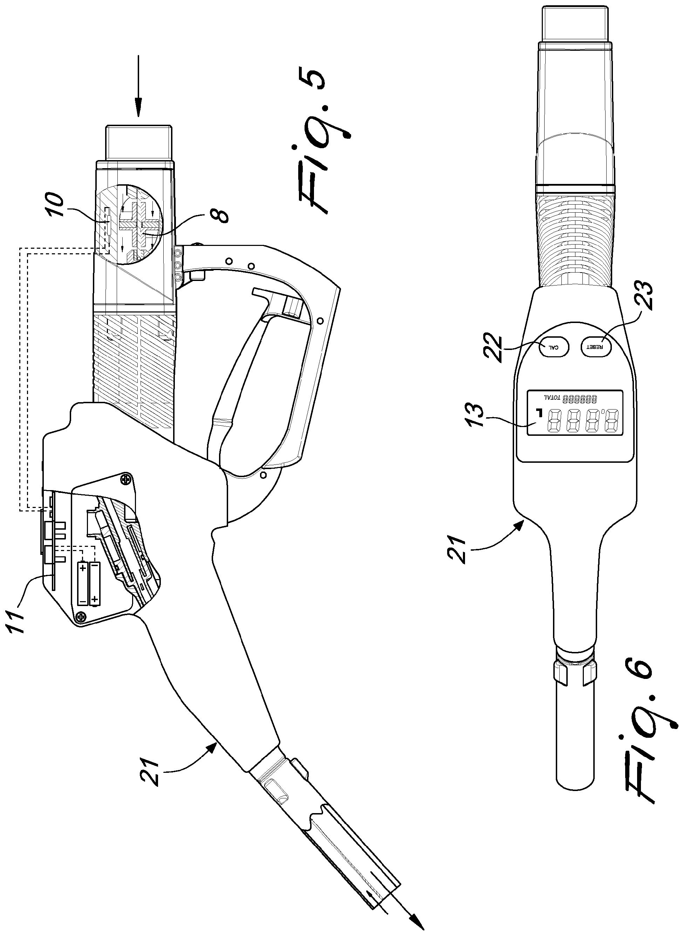

Figures 5 and 6 respectively show a side view and a plan view of the gun according to another embodiment of the present invention;

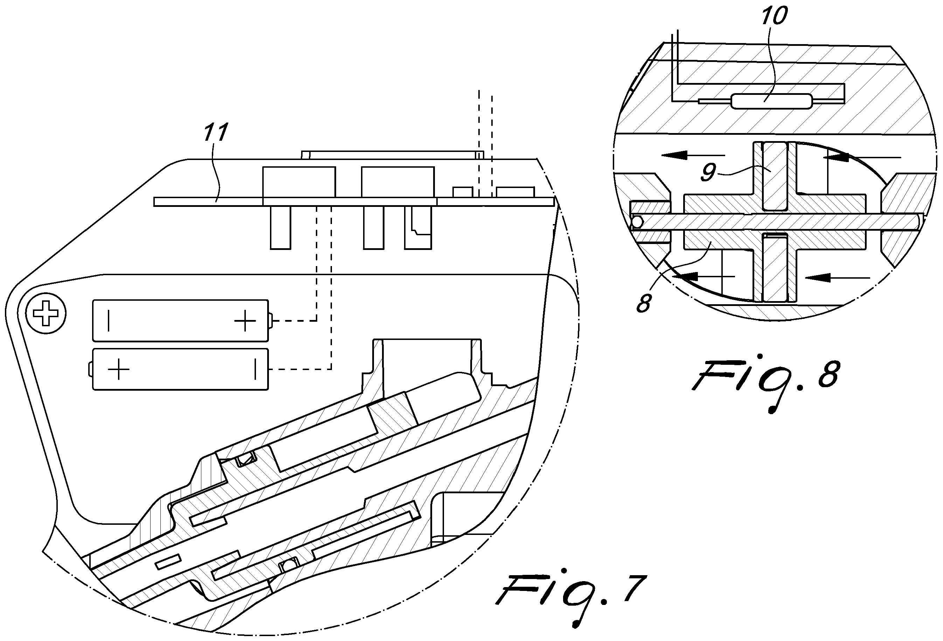

Figures 7 and 8 show enlarged details highlighted in Figures 5 and 6.

With references to the figures 1 to 4, the reference numeral 1 generally designates a dispensing gun which comprises a structure 2 provided with a connector 3 for coupling to a pipe for feeding a liquid, and a nozzle 4 designed to be inserted into a container designed to receive the dispensed liquid.

The nozzle 4 comprises a duct 5 for dispensing the liquid which is controlled by an actuation handle 6 operated by the user, and further comprises an air intake duct 7 which reaches a device adapted to block the dispensing of the liquid when the inflow of air accommodated in the structure 2 (and not shown in the figures) ceases.

A feature of the invention consists in the presence of an element that is sensitive to the passage of the liquid and is constituted by a turbine 8 which comprises a magnet 9 functionally connected to a sensor which is constituted by a reed ampoule 10 which transmits signals to an electronic board 11, which is powered by means of batteries 12 and is capable of processing such signals so as to record the quantity of dispensed liquid which appears on a display 13.

Moreover the electronic board 11 is also provided with a further function that consists in the possibility offered to the user to program, by means of buttons 14, the quantity of liquid that is desired to be dispensed.

To this end the gun 1 comprises means adapted to block the air intake duct 7 which are activated upon a command that arrives from the electronic board 11 when the value of the quantity of liquid that is programmed for dispensing is reached. The arrest of the inflow of air to the aforementioned device present in the gun consequently causes the arrest of the flow of liquid dispensed by the gun.

Such means comprise a flow control element 15 which is retained by the action of a spring 16 in a position for opening the duct 7, as shown in the figures and in particular in figure 3 which indicates the flow of air with arrows, and is provided with a magnet 17 designed to be operated by a fixed coil 18 which is connected to the electronic board 11 to provide the translational movement of such flow control element toward the position for closing the duct 7 when the value set on the board 11 is reached.

Finally the numerals 19 and 20 respectively indicate a button to start operation and a button to reset the previous readings.

Figures 5 to 8 show another embodiment of the invention, generally indicated with the reference numeral 21, which again features the presence of the turbine 8 which comprises the magnet 9 functionally connected with the reed ampoule 10 that transmits signals to the electronic board 11 which is capable of processing such signals so as to record the quantity of dispensed liquid which appears on the display 13.

By means of a button 22 the device is calibrated, and by means of a button 23 the previous reading is reset.

The invention as described is susceptible to numerous modifications and variations, all within the aim of the appended claims. Moreover, all the details may be replaced with other technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic liquid dispensing gun (1), comprising a structure (2) provided with a connector (3) for coupling to a pipe for feeding a liquid and with a nozzle (4) designed to be inserted in the container designed to receive the dispensed liquid, said nozzle (4) comprising a duct (5) for dispensing the liquid which is controlled by an actuation handle (6) and an air intake duct (7), which reaches a device adapted to block the dispensing of the liquid when the inflow of air ceases, said automatic gun (1) further comprising an element (8, 9) that is sensitive to the passage of the liquid and is connected to a sensor (10) which is adapted to transmit signals related to the dispensed quantity of said liquid to an electronic board (11) capable of recording said dispensed quantity of liquid, with transmission of a data item related to said quantity to a display (13) accommodated within said structure (2)
**characterized in that** it comprises means (15, 16, 17 and 18) adapted to block the air intake duct, which are adapted to be activated upon a command that arrives from the electronic board (11) when a value of the quantity of liquid dispensed that is set by the user on said board (11) is reached, consequently stopping the flow of the liquid dispensed by the gun (1).

2. The automatic gun according to claim 1, **characterized in that** said means adapted to block the air intake duct comprise a flow control element (15) and a spring (16), said spring (16) retaining said flow control element (15) in a position for opening the duct (7), said flow control element (15) being provided with a magnet (17) designed to be operated by a fixed coil (18), which is arranged so as to wrap around said duct (7) and is connected to the electronic board (11) in order to provide the translational motion of said flow control element (15) toward the position for closing the duct (7).

## Patentansprüche

1. Eine automatische Flüssigkeitszapfpistole (1), die eine Struktur (2) umfasst, ausgestattet mit einem Verbindungselement (3) zur Kopplung mit einer Rohrleitung zum Zuführen einer Flüssigkeit und mit einer Düse (4), die dazu bestimmt ist, in den Behälter eingeführt zu werden, der dazu bestimmt ist, die abgegebene Flüssigkeit aufzunehmen, wobei die Düse (4) eine Leitung (5) für die Abgabe der Flüssigkeit umfasst, die durch einen Betätigungshebel (6) gesteuert wird, und eine Lufteinlassleitung (7), die eine Vorrichtung erreicht, welche ausgebildet ist, um die Abgabe der Flüssigkeit zu blockieren, wenn das Einströmen von Luft aufhört, wobei die automatische Pistole (1) weiter ein Element (8, 9) umfasst, das empfindlich gegenüber dem Durchfluss der Flüssigkeit und mit einem Sensor (10) verbunden ist, welcher ausgebildet ist, um Signale bezüglich der abgegebenen Menge der Flüssigkeit an eine elektronische Baugruppe (11) zu übertragen, die in der Lage ist, die abgegebene Menge an Flüssigkeit zu erfassen, mit Übertragung eines Datenelements, das mit dieser Menge verknüpft ist, an eine in der Struktur (2) untergebrachte Anzeige (13),
**dadurch gekennzeichnet, dass** sie Mittel (15, 16, 17 und 18) umfasst, die ausgebildet sind, um die Lufteinlassleitung zu blockieren, und um durch einen Befehl aktiviert zu werden, der von der elektronischen Baugruppe (11) kommt, wenn ein Wert der abgegebenen Flüssigkeitsmenge, der vom Benutzer an der Baugruppe (11) eingestellt wird, erreicht ist, woraufhin der Fluss der von der Pistole (1) abgegebenen Flüssigkeit angehalten wird.

2. Die automatische Pistole gemäß Anspruch 1, **dadurch gekennzeichnet, dass** die Mittel, die ausgebildet sind, um die Lufteinlassleitung zu blockieren, ein Durchflussregelelement (15) und eine Feder (16), umfassen, wobei die Feder (16) das Durchflussregelelement (15) in einer Position zum Öffnen der Leitung (7) hält und das Durchflussregelelement (15) mit einem Magneten (17) ausgestattet ist, der dazu bestimmt ist, von einer festen Spule (18) betätigt zu werden, die angeordnet ist, um sich um die Leitung (7) zu winden, und mit der elektronischen Baugruppe (11) verbunden ist, um für die Translationsbewegung des Durchflussregelelements (15) zu der Position zum Schließen der Leitung (7) zu sorgen.

## Revendications

1. Pistolet de distribution de liquide automatique (1), comprenant une structure (2) munie d'un raccord (3) pour le couplage à un tuyau afin de délivrer un liquide et d'une buse (4) conçue de façon à être insérée dans le récipient conçu de façon à recevoir le liquide distribué, ladite buse (4) comprenant un conduit (5) pour distribuer le liquide qui est régulé par une poignée d'actionnement (6) et un conduit d'admission d'air (7), qui atteint un dispositif adapté de façon à interrompre la distribution du liquide lorsque l'écoulement d'entrée d'air cesse, ledit pistolet automatique (1) comprenant de plus un élément (8, 9) qui est sensible au passage du liquide et qui est connecté à un capteur (10) qui est adapté de façon à transmettre des signaux associés à la quantité distribuée dudit liquide à une carte électronique (11) susceptible d'enregistrer ladite quantité distribuée de liquide, avec la transmission d'un élément de données associé à ladite quantité à un dispositif d'affichage (13) reçu à l'intérieur de ladite structure (2),
**caractérisé en ce qu'**il comprend des moyens (15, 16, 17 et 18) adaptés de façon à boucher le conduit d'admission d'air, ceux-ci étant adaptés de façon à être activés lors d'un ordre qui arrive à partir de la carte électronique (11) lorsqu'une valeur de la quantité de liquide distribué qui est établie par l'utilisateur sur ladite carte (11) est atteinte, de façon à interrompre par conséquent l'écoulement du liquide distribué par le pistolet (1).

2. Pistolet automatique selon la revendication 1, **caractérisé en ce que** lesdits moyens adaptés de façon à boucher le conduit d'admission d'air comprennent un élément de commande d'écoulement (15) et un ressort (16), ledit ressort (16) maintenant ledit élément de commande d'écoulement (15) dans une position pour ouvrir le conduit (7), ledit élément de commande d'écoulement (15) étant muni d'un aimant (17) conçu de façon à être actionné par un enroulement fixe (18), qui est agencé de façon à s'enrouler autour dudit conduit (7) et qui est connecté à la carte électronique (11) de façon à produire le mouvement de translation dudit élément de commande d'écoulement (15) vers la position pour la fermeture du conduit (7).
